Europäisches Patentamt

European Patent Office

Office européen des brevets

(19)

(11) Veröffentlichungsnummer: **0 012 236**
**B1**

(12) **EUROPÄISCHE PATENTSCHRIFT**

(45) Veröffentlichungstag der Patentschrift:
**09.02.83**

(21) Anmeldenummer: **79104538.8**

(22) Anmeldetag: **16.11.79**

(51) Int. Cl.³: **E 02 F  9/18**, B 62 D  49/08

(54) **Fahrzeug mit verstellbarem Belastungsgewicht.**

(30) Priorität: **16.12.78  DE 2854526**

(43) Veröffentlichungstag der Anmeldung:
**25.06.80 Patentblatt 80/13**

(45) Bekanntmachung des Hinweises auf die Patenterteilung:
**09.02.83 Patentblatt 83/6**

(84) Benannte Vertragsstaaten:
**AT CH FR GB IT SE**

(56) Entgegenhaltungen:
**AU-B-426 739**
**FR-A-1 253 338**
**FR-A-1 285 451**
**US-A-1 497 686**
**US-A-3 497 095**
**US-A-3 504 933**

(73) Patentinhaber: **Karl Schaeff GmbH & Co.,**
**Postfach 20 Seestrasse 172, D-7183 Langenburg/Württ.**
**(DE)**

(72) Erfinder: **Schaeff, Hans, D-7183 Langenburg (DE)**

(74) Vertreter: **Raeck, Wilfrid, Dipl.-Ing., Moserstrasse 8,**
**D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Fahrzeug mit verstellbarem Belastungsgewicht

Die Erfindung betrifft ein Fahrzeug mit einem räder- oder raupengetriebenen Fahrwerk mit einer oder mehreren angetriebenen Radachsen sowie mit einem über die Fahrzeuglänge verlagerbaren und geführten Ballastmittel, insbesondere Trägerfahrzeug mit Anschlüssen an beiden Enden für feste oder ausweichende Anbaugeräte.

Um bei Frontladern die Ladeschaufel oder ein anderes an Schwenkarmen gehaltenes Arbeitsgerät unbeschränkt einsetzen zu können, sind solche Fahrzeuge üblicherweise rückwärtig mit einem Gegengewicht versehen. Um im Hinblick auf die beschränkten Einsatzmöglichkeiten von Frontladern das verfügbare Trägerfahrzeug auch anderweitig auszunutzen, ist es üblich, Anbauhalterungen für Heckanbaugeräte vorzusehen, z. B. Anbaubagger, Grabenfräsen, Rammgeräte usw.

Wird am Heck eines Frontladers ein Anbaubagger eingehängt, so ist das dort befindliche Gegengewicht nicht nur beim Anbauvorgang hinderlich, sondern auch wirkungsmäßig ungünstig, da es die Belastung durch den Anbaubagger erhöht und u. U. die Fahrzeug-Vorderachse vollständig entlastet. Selbst bei abgenommenen Gegengewicht besteht die Gefahr, daß das durch das Heckanbaugerät belastete Fahrzeug während der Fahrt vorn hochkippt.

Bei Frontladern hat man deshalb schon vorgeschlagen, das Gegengewicht abnehmbar anzuhängen. Dies erfordert beim Umrüsten ein zusätzliches Arbeitsgerät, das an das Trägerfahrzeug heranfährt, um das Gegengewicht abzunehmen. Andernfalls muß der Frontlader in eine Werkstatt gefahren und dort mittels eines Flaschenzuges oder eines Krans vom Gegengewicht befreit werden.

Ähnliche Probleme treten allgemein bei einem Trägerfahrzeug auf, das an beiden Enden mit Anschlüssen für Anbaugeräte beliebiger Art versehen ist und an dem dem schwereren oder größere Standkräfte erfordernden Anbaugeräte entgegengesetzten Ende ein lösbares Gegengewicht trägt, wobei anstelle einer Ladeschaufel auch andere Frontgeräte, wie Stapler, Fräsköpfe oder Tunnelvortriebsgeräte und am rückwärtigen Ende andere Anbaugeräte oder fest in das Fahrzeug integrierte Geräte vorgesehen sein können.

Aus der US-A-3 497 095 ist es bei einem Fahrzeug mit an der Vorderseite angeordnetem Hubstapelgerät bekannt, ein Ballastgewicht, das mit Rollen auf einem mittleren Längsträger des Fahrzeugrahmens abgestützt ist und sich beiderseits des Rahmenteils nach unten erstreckt, innerhalb des Abstandes zwischen den Radachsen mit Hilfe eines Hydraulikzylinders der rückwärtigen Achse anzunähern, um die Standfestigkeit des Fahrzeuges bei an der Frontseite vorstehender, beladener Hubgabel zu verbessern. Der Umfang der Gewichtsverlagerung ist sowohl durch die nur zum Teil ausnutzbare Länge des Radstandes, als auch durch die verhältnismäßig großen Abmessungen des Gegengewichtes stark eingeschränkt. Als Verlagerungsantrieb ist ein aufwendiges Hydrauliksystem mit Steuerleitungen, Ventilen, Zylinder und Druckaggregat notwendig.

Bei einem aus der US-A-3 504 933 bekannten Fahrzeug mit einem rädergetriebenen Fahrwerk sind zwei Ballastgewichte auf beiderseits der Fahrzeuglängsmittelachse angeordneten Führungsschienen verschiebbar, wobei sich die Führungsschienen von einer hinter der Fahrzeugvorderachse beginnenden Stelle aus rückwärtig bis über die Hinterachse erstrecken und der Verschiebeweg der Ballastgewichte auf den Raum zwischen den Rädern begrenzt ist. Beide Ballastgewichte werden von oberhalb der Führungsschienen in nach oben offenen Ausnehmungen der Ballastgewichte untergebrachten Hydraulikzylindern in Längsrichtung verstellt.

Schließlich ist es aus der FR-A-1 285 451, insbesondere bei einem Ackerschlepper bekannt, unterhalb des Fahrzeugrahmens oder in diesen integriert ein oder mehrere an den Enden verschlossene Rohre vorzusehen, die sich etwa über die Fahrzeuglänge erstrecken. In jedem Rohr befindet sich ein Ballastgewicht, um nach Wunsch des Fahrers und bei Bedarf in den Bereich der vorderen oder rückwärtigen Radachse gebracht werden kann. Zu diesem Zweck wird das Ballastgewicht mit Hilfe von dem einen oder anderen Rohrende zugeführten Drucköl, ähnlich einem Hydraulikkolben, verschoben.

Der Erfindung liegt die Aufgabe zugrunde, ein Fahrzeug der eingangs beschriebenen Art dahingehend weiterzubilden und zu verbessern, daß die je nach Einsatz des einen oder anderen Arbeitsgerätes erforderliche Verlagerung der Ballastmittel schnell und einfach ohne zusätzliche Arbeits- oder Antriebsmittel durchgeführt werden kann.

Gemäß der Erfindung ist diese Aufgabe dadurch gelöst, daß die Ballastmittel in der jeweiligen Endstellung festlegbar bzw. absperrbar und bei beseitigter Festlegung ohne mechanische oder hydraulische Antriebsmittel allein durch Schrägstellen bzw. Anheben des Fahrzeuges um eine der Radachsen zwischen vorderer und rückwärtiger Stellung verlagerbar sind.

Bei Anwendung der Erfindung ist es beispielsweise bei einem Frontlader nicht mehr erforderlich, vor dem Anschließen an das Heckanbaugerät zunächst ein für den Frontladerbetrieb notwendiges Gegengewicht abzunehmen. Vielmehr wird das Heckanbaugerät eingehängt und an die Hydraulik angeschlossen, worauf im Falle eines Baggers durch Abstützung des Baggerlöffels auf dem Boden das Fahrzeugheck um die vordere Radachse hochgekippt wird, so daß dann die Ballastmittel nach ihrer Entriegelung ohne zusätzlichen Antrieb in Richtung auf das vordere Ende des Fahrzeuges verlagert werden. Die einfache Handhabung bei der Beseitigung rückwärtiger Gegengewichte ist nicht nur für sich vorteilhaft, sondern wirkt sich auch insofern günstig aus, als nunmehr Umrüstungen unmittelbar an der Einsatzstelle vorgenommen werden und die Kippsicherheit des Fahrzeuges bzw. der Gerätekombination erhöht wird.

Wenn nach Beendigung von Arbeiten mit dem Heckanbaugerät der Frontladerbetrieb wieder aufzunehmen ist, kann das Fahrzeug nach Abnehmen des Heckanbaugerätes durch Abstützung der Ladeschaufel gegen den Boden um die hintere Radachse verschwenkt und nach vorn angehoben werden, um die Ballastmittel nach Entriegelung in die für den Frontladerbetrieb bestimmte rückwärtige Stellung zu verlagern.

Bei einer allgemeineren Ausführungsform läßt sich die Erfindung mit Vorteil auch bei beliebigen Fahrzeugen mit einem räder- oder raupengetriebenen Fahrwerk anwenden, wenn einer oder mehreren getriebenen Radachsen zur Erhöhung der Traktion Ballastmittel zugeordnet sind, indem man mindestens Teile dieser Ballastmittel zwischen den den verschiedenen Radachsen zugeordneten Stellungen verlagert. Durch solche Gewichtsverlagerung kann man z. B. bei Bergfahrten die jeweils günstigste Radachse belasten.

Als Gegengewichte ausgeführte Ballastmittel können auf beiderseits der Fahrerkabine und oberhalb des Fahrwerkes angeordneten, sich über die Fahrzeuglänge erstreckenden Führungen beweglich und in durch Anschläge definierten Endstellungen feststellbar sein. Wenn die Gegengewichte jeweils im Bereich ihrer Enden mittels Rollen auf den Führungen beweglich abgestützt sind, lassen sich die Gegengewichte aufgrund der weitgehend beseitigten Reibung sowie aufgrund der leichten Zugänglichkeit gegebenenfalls sogar von Hand verlagern.

Bei einer zweckmäßigen Ausführungsform können die Führungen jeweils zwei unter seitlichem Abstand zueinander angeordnete Winkelschienen aufweisen, deren waagerechte Schenkel Laufbahnen für das Gegengewicht und deren senkrechte Schenkel seitliche Laufbahnbegrenzungen bilden. Vorzugsweise bestehen die Führungen jedoch jeweils aus seitlich und nach unten geschlossenen Rinnen mit waagerechtem Boden und können an ihrer Unterseite als Teile von Kotflügeln ausgebildet sein. Auch bei Winkelschienen kann der dazwischen befindliche Abstand abgedeckt sein, um eine Verschmutzung der Gegengewichte zu verhindern und einer Beeinträchtigung der freien Verschiebbarkeit vorzubeugen.

Um die verstellbaren Gegengewichte auf einem Trägerfahrzeug ohne Umbau unterbringen zu können, kann es sinnvoll sein, wenn die Außenseiten der Führungen über den Längsbereich einer Einstiegtreppe zur Fahrerkabine unterbrochen und jeweils durch eine lösbar unterstützte Führungsschiene überbrückt sind. Dadurch braucht nur die äußere Winkelschiene unterbrochen zu werden, um den unbehinderten Zugang zur Fahrerkabine zu gewährleisten, während die stehenbleibende innere, d. h. der Fahrerkabine nähere Schiene als Stufe der Einstiegtreppe verwendet werden kann.

Wenn das Trägerfahrzeug als Knicklenker ausgeführt ist, müssen die beidseitigen Führungen zwischen Vorderwagen und Hinterwagen unterbrochen sein. Wegen der Schwenkverhältnisse von Vorderwagen zu Hinterwagen wird die größere Unterbrechung der äußeren Längsführungsabschnitte durch eine lösbar unterstützte Führungsschiene überbrückt, während die der Kabine nahen Längsführungsabschnitte nur durch einen relativ schmalen Spalt unterbrochen zu sein brauchen. In der Geradeausstellung des Knicklenkers kann das jeweilige Gegengewicht den Spalt in den Führungen problemfrei überwinden, selbst wenn er eine größere Breite aufweisen sollte, da ein auf Rollen abgestütztes Gegengewicht zu jedem Zeitpunkt auf mindestens drei Rollen läuft und daher auch nicht unbeabsichtigt anhält oder mit einer Rolle in den Spalt einfällt und sich verklemmt. Somit sind auch bei der Knicklenkerbauart die Außenseiten der Führungsschienen im Bereich einer Einstiegtreppe unterbrochen und durch eine lösbar unterstützte Führungsschiene überbrückbar.

Um die Gegengewichtsteile, deren Rollen oder Führungsabschnitte vor Verschmutzung oder Witterungseinflüssen zu schützen, können die Führungen mindestens im Bereich der beiden Endstellungen der Gegengewichte mit oberen Abdeckungen versehen sein. In den Endstellungen werden sie durch beliebige geeignete Mittel wie Schrauben, Steckbolzen od. dgl. gesichert.

Bei einer anderen Ausführungsform können die Gegengewichtsteile aus einer Flüssigkeit bestehen, die in einem geschlossenen System enthalten ist, das im Bereich der vorderen und rückwärtigen Fahrzeugenden angeordnete Behälter, mindestens eine dazwischen angeschlossene Verbindungsleitung sowie mindestens ein in der Verbindungsleitung angeordnetes Absperrventil umfaßt. Wenngleich bei Anwendung von Flüssigkeiten mit hohem spezifischen Gewicht, wie Quecksilber, der hohe Preis zu berücksichtigen ist, hat dieser Vorschlag den Vorteil, daß außer Verbindungsleitungen keine weiteren Führungen notwendig sind und verhältnismäßig großvolumige Behälter vorgesehen werden können, mit denen Leerräume im Bereich der Aufbauten des Trägerfahrzeuges ausgefüllt werden, ohne die Außenabmessungen des Fahrzeuges zu verändern. Solche Behälter können sich je nach dem zur Verfügung stehenden Platz an den Fahrzeugenden auch über die gesamte Fahrzeugbreite erstrecken. Selbstverständlich kann die Flüssigkeit auch aus Hydrauliköl bestehen.

Gemäß einer Variante der Erfindung bestehen die Gegengewichtsteile aus schüttfähigem, pulverförmigem oder körnigem Material oder Kugeln, das jeweils in einem geschlossenen System untergebracht ist, bestehend aus im Bereich der vorderen und rückwärtigen Enden des Trägerfahrzeugs angeordneten Behältern und dazwischen verlaufenden Verbindungsleitungen mit mindestens einem Absperrventil. Werden beispielsweise kleine Schrotkugeln verwendet, so können die Vorteile eines Materials mit hohem spezifischen Gewicht mit denen verhältnismäßig großvolumiger Behälter und bequem unterzubringender Verbindungsleitungen kombiniert werden.

Ausführungsbeispiele der Erfindung sind nachfolgend in Verbindung mit einem Frontlader anhand der Zeichnungen näher erläutert. Es zeigen jeweils schematisch

Fig. 1 die Seitenansicht eines mit einem Heckanbaubagger versehenen Frontladers,

Fig. 2 eine teilweise geschnittene Draufsicht auf den Frontlader nach Fig. 1, wobei der Heckanbaubagger abgenommen ist.

Fig. 3 eine vergrößerte Draufsicht auf eine seitlich des Trägerfahrzeugs angeordnete Längsführung eines Gegengewichtsteiles,

Fig. 4 einen senkrechten Schnitt nach der Linie A-B in Fig. 3,

Fig. 5 die Seitenansicht eines Frontladers gemäß einer anderen Ausführungsform der Erfindung und

Fig. 6 eine Seitenansicht des Frontladers nach Fig. 5, der einen Heckanbaubagger trägt.

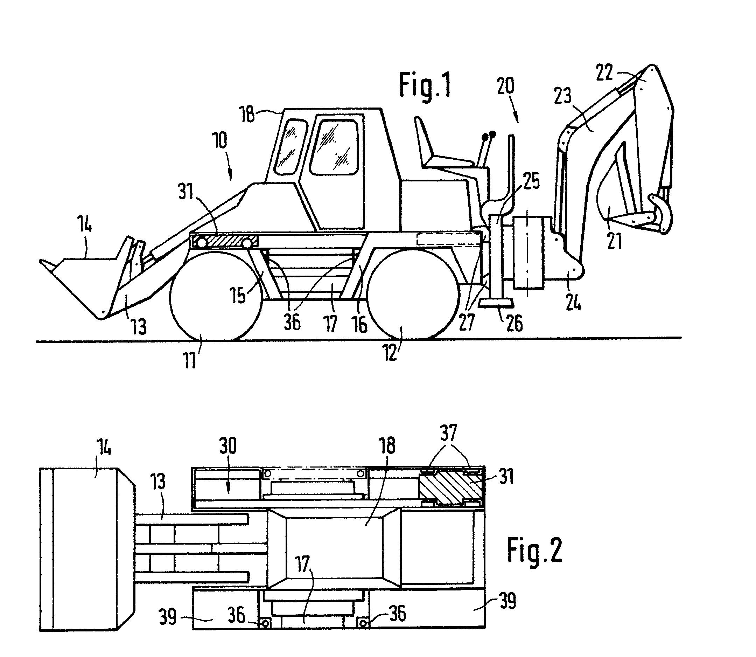

Entsprechend Fig. 1 und 2 ist das Trägerfahrzeug 10 eines Frontladers auf vorderen und rückwärtigen Bodenrädern 11 bzw. 12 abgestützt. Am Fahrzeugkörper sind vordere Schwenkarme 13 mit einer Ladeschaufel 14 hydraulisch verstellbar angelenkt. Die Bodenräder 11, 12 sind durch Kotflügel 15, 16 seitlich und nach oben verkleidet, wobei zwischen den Kotflügeln eine Einstiegtreppe 17 zu einer Fahrerkabine 18 vorgesehen ist.

Am rückwärtigen Ende des Trägerfahrzeuges 10 befindet sich ein Anbaubagger 20, der in nicht näher gezeigte Anbauhalterungen am Trägerfahrzeug eingehängt ist. Der Anbaubagger entspricht einer üblichen Bauart und umfaßt im wesentlichen einen Grablöffel 21, Löffelstiel 22, Ausleger 23 sowie einen Tragteil 24, der um eine senkrechte Achse schwenkbar ist. Die Schwenkachse ist an einer Querführung 25 verstellbar befestigt, die seitliche Abstützbeine 26 und zum Trägerfahrzeug 10 gerichtete Kupplungsglieder 27 aufweist.

Die waagerechten Abschnitte der Kotflügel 15, 16 sind in zu beiden Seiten des Trägerfahrzeuges angeordnete Längsführungen 30 für Gegengewichtsteile 31 integriert. Wenn der Frontlader gemäß Fig. 2 kein Heckanbaugerät trägt, befinden sich die Gegengewichte 31 in rückwärtigen Stellungen auf den Längsführungen 30. Wird der Frontlader mit einem Heckanbaugerät gemäß Fig. 1 ausgestattet, so befinden sich die Gegengewichte 31 in ihrer vorderen Stellung.

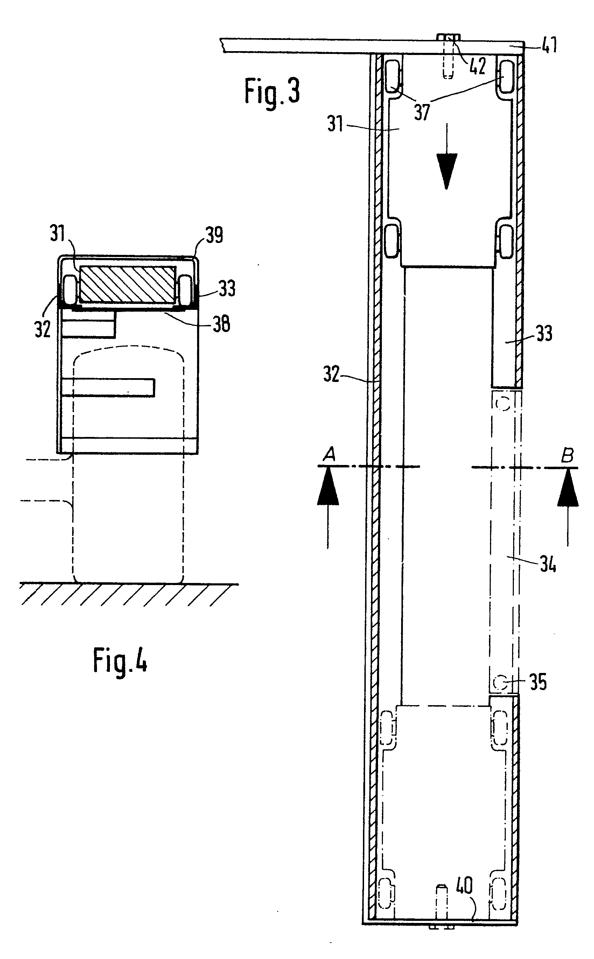

Entsprechend Fig. 3 und 4 besteht die Führung für ein Gegengewicht 31 aus zwei unter seitlichem Abstand zueinander angeordneten Winkelschienen 32, 33. Die den Aufbauten des Trägerfahrzeuges benachbarte innere Winkelschiene 32 erstreckt sich durchgehend über die gesamte Länge des Trägerfahrzeuges. Die äußere Winkelschiene 33 ist im Bereich der Einstiegtreppe 17 (Fig. 1, 2) unterbrochen und kann durch eine Führungsschiene 34 vervollständigt werden, wenn das Gegengewicht aus der rückwärtigen Stellung gemäß Fig. 3 in die mit unterbrochenen Linien dargestellte vordere Stellung verlagert werden soll. Die Führungsschiene 34 wird auf dem Fahrzeug mitgeführt und bei Bedarf z. B. mit senkrechten Zapfen 35 in Aufnahmeöffnungen von in Fig. 1 sichtbaren Halterungen 36 eingesteckt und dort unterstützt. Wenn die Führungsschiene 34 nach Verlagerung des Gegengewichtes 31 wieder beseitigt worden ist, sind die Stufen der Einstiegtreppe 17 gemäß Fig. 4 unbehindert begehbar. Das Gegengewicht 31 ist an beiden Enden auf Rollen 37 gelagert, die auf den waagerechten Schenkeln der Winkelschienen 32, 33 laufen. Der Abstand zwischen den Winkelschienen 32, 33 ist gemäß Fig. 4 durch eine Abdeckung 38 überbrückt und geschlossen, die nach unten hin als Kotflügel wirksam ist. Die durch die beiden Winkelschienen 32, 33 und die untere Abdeckplatte 38 gebildete Rinne, die durch ein entsprechendes zusammenhängendes Rinnenprofil ersetzt sein kann, ist mindestens im Bereich der Endstellungen des Gegengewichtes jeweils durch eine obere Abdeckung 39 verschlossen, die sich entsprechend Fig. 1 und 2 jedoch über die Länge der Kotflügel jeweils bis zur Einstiegtreppe 17 erstreckt. Das vordere und rückwärtige Ende des so gebildeten Führungskanals ist durch verschweißte oder angeschraubt, als Endanschläge wirkende senkrechte Platten 40 bzw. 41 verschlossen. Durch Öffnungen der Anschlagplatten 40, 41 wird das Gegengewicht 31 mittels einer Schraube 42 festgehalten.

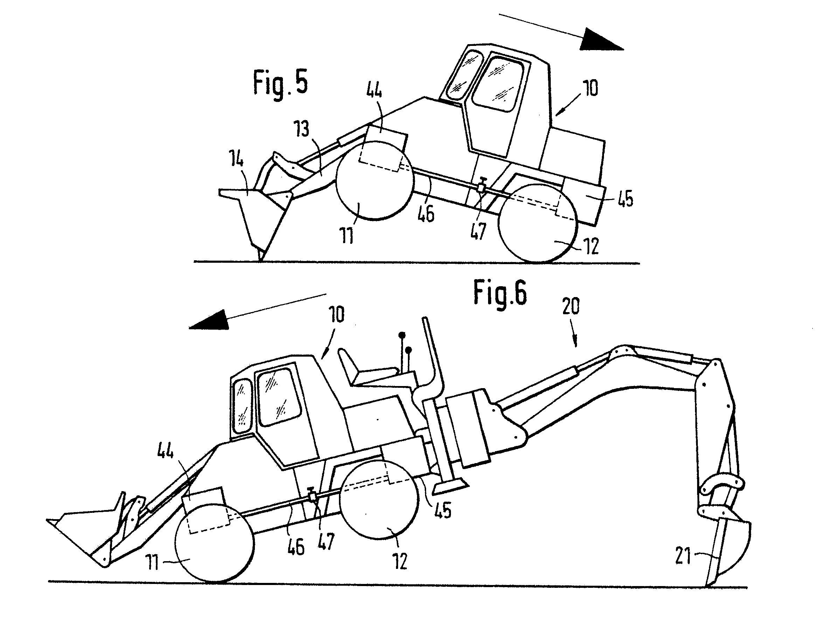

Im Frontladerbetrieb befinden sich die Gegengewichte 31 in ihren rückwärtigen Stellungen auf den Führungen 30 gemäß Fig. 2. Wird das Trägerfahrzeug mit einem Heckanbaugerät 20 versehen, so wird dies zunächst auf übliche Art eingehängt und an die Hydraulik des Trägerfahrzeuges angeschlossen, worauf nach Abstützung des Grablöffels 21 auf dem Boden und durch geeignetes Verschwenken von Ausleger 23 und Löffelstiel 22 das Trägerfahrzeug entsprechend Fig. 6 schräggestellt wird. Zuvor wurden die Feststellmittel 42 der Gegengewichte gelöst und mit den Führungsschienen 34 die normalerweise offenen Abschnitte der Führungen 30 überbrückt. In der Schrägstellung nach Fig. 6 können die Gegengewichte 31 in ihre vorderen Endstellungen rollen, wo sie von neuem fixiert werden. Umgekehrt wird nach Abnehmen des Heckanbaugerätes die Ladeschaufel 14 am Boden abgestützt und dann das Trägerfahrzeug entsprechend Fig. 5 durch Betätigung der Schwenkarme 13 vorn angehoben, so daß die Gegengewichte 31 in ihre rückwärtigen Stellungen rollen, wo sie wieder festgelegt werden.

Fig. 5 und 6 zeigen schematisch vordere und rückwärtige Behälter 44, 45, die beiderseits des Trägerfahrzeuges angeordnet sind und sich ggf. auch über dessen Breite erstrecken. Die Behälter stehen über geeignete Leitungen 46 miteinander in Verbindung, deren Querschnitt der Art des fließ- oder schüttfähigen Gegengewichtsmaterials angepaßt ist. In der Verbindungsleitung 46 ist ein Absperrventil 47 angeordnet, um das bei Schrägstellen des Trägerfahrzeuges nach vorn oder nach hinten verlagerte Material abzusperren. Die Behälter 44, 45 sind rein schematisch dargestellt und können selbstverständlich zur Vergrößerung ihres Fassungsvolumens z. B. schräg nach unten soweit verlagert werden, daß in der Schrägstellung des Trägerfahrzeuges aus dem angehobenen Behälter sämtliches Material im freien Fließ- oder Schüttgang entweichen kann.

**Patentansprüche**

1. Fahrzeug mit einem räder- oder raupengetriebenen Fahrwerk (11, 12) mit einer oder mehreren angetriebenen Radachsen sowie mit einem über die Fahrzeuglänge verlagerbaren und geführten Ballastmittel, insbesondere Trägerfahrzeug (10) mit Anschlüssen an beiden Enden für feste oder auswechselbare Anbaugeräte (14, 20), dadurch gekennzeichnet, daß die Ballastmittel in der jeweiligen Endstellung festlegbar bzw. absperrbar und bei beseitigter Festlegung ohne mechanische oder hydraulische Antriebsmittel allein durch Schrägstellen bzw. Anheben des Fahrzeugs um eine der Radachsen zwischen vorderer und rückwärtiger Stellung verlagerbar sind.

2. Fahrzeug nach Anspruch 1, dadurch gekennzeichnet, daß die Ballastmittel Gegengewichte (31) sind, die auf beiderseits der Fahrerkabine (18) oberhalb des Fahrwerks (11, 12) angeordneten und sich über die Fahrzeuglänge erstreckenden Führungen (30) beweglich und in durch Anschläge (40, 41) definierten Endstellungen feststellbar sind.

3. Fahrzeug nach Anspruch 2, dadurch gekennzeichnet, daß die Gegengewichte (31) jeweils im Bereich ihrer Enden mittels Rollen (37) auf den Führungen (30) beweglich abgestützt sind.

4. Fahrzeug nach Anspruch 2, dadurch gekennzeichnet, daß die Führungen (30) jeweils zwei unter seitlichem Abstand zueinander angeordnete Winkelschienen (32, 33) aufweisen, deren waagerechte Schenkel Laufbahnen für das Gegengewicht (31) und deren senkrechte Schenkel seitliche Laufbahnbegrenzungen bilden.

5. Fahrzeug nach Anspruch 2, dadurch gekennzeichnet, daß die Führungen (30) jeweils aus seitlich und nach unten geschlossenen Rinnen bestehen und an ihrer Unterseite (38) als Teile von Kotflügeln ausgebildet sind.

6. Fahrzeug nach Anspruch 2, dadurch gekennzeichnet, daß die Außenseiten der Führungen (30) über den Längsbereich einer Einstiegtreppe (17) zur Fahrerkabine (18) unterbrochen und jeweils durch eine lösbar unterstützte Führungsschiene (34) überbrückt sind.

7. Fahrzeug mit Knicklenkung nach einem der vorhergehenden Ansprüche, dadurch gekennzeichnet, daß beidseitige, der Fahrerkabine benachbarte Längsführungsabschnitte zwischen Vorderwagen und Hinterwagen durch einen schmalen Schlitz unterbrochen sind.

8. Fahrzeug nach einem der vorhergehenden Ansprüche, dadurch gekennzeichnet, daß die Führungen (30) mindestens im Bereich der beiden Endstellungen der Gegengewichte mit oberen Abdeckungen (39) versehen sind.

9. Fahrzeug nach einem der vorhergehenden Ansprüche, dadurch gekennzeichnet, daß die Führungen durch Endanschläge (40, 41) endseitig verschlossen sind, an denen die Gegengewichte (31) durch Steck- und/oder Schraubmittel (42) feststellbar sind.

10. Fahrzeug nach Anspruch 1, dadurch gekennzeichnet, daß die Ballastmittel aus einer Flüssigkeit bestehen, die in einem geschlossenen System enthalten ist, das im Bereich der vorderen und rückwärtigen Fahrzeugenden angeordnete Behälter (44, 45), mindestens eine dazwischen angeschlossene Verbindungsleitung (46) sowie mindestens ein in der Verbindungsleitung angeordnetes Absperrventil (47) umfaßt.

11. Fahrzeug nach Anspruch 10, dadurch gekennzeichnet, daß die Behälter (44, 45) mit Be- und Entlüftungsöffnungen bzw. -ventilen versehen sind.

12. Fahrzeug nach Anspruch 1, dadurch gekennzeichnet, daß die Ballastmittel aus schüttfähigem, pulverförmigem oder körnigem Material oder Kugeln bestehen, das in einem geschlossenen System untergebracht ist, bestehend aus im Bereich der vorderen und rückwärtigen Fahrzeugenden angeordneten Behältern (44, 45) und dazwischen verlaufenden Verbindungsleitungen (46) mit mindestens einem Absperrventil (47).

**Claims**

1. A vehicle with a wheel driven or caterpillar driven undercarriage (11, 12) having one or more driven axles and also including ballast means displaceable and guided over the length of the vehicle, particularly a carrier vehicle (10) provided on both ends with connections for fixed or replaceable implements (14, 20), characterized in that said ballast means are operable to be locked or to be shut off, respectively, in their end positions, and also, when the lock is removed, are displaceable between a forward and rearward position without the use of mechanic or hydraulic drive means, but only by tilting or raising, respectively, of the vehicle about one of its axles.

2. Vehicle according to claim 1, characterized in that the ballast means comprise counterweights (31) which are movable on guideways (30) disposed on both sides of the operator cab (18) above said undercarriage (11, 12) and extending over the length of the vehicle, said counterweights being operable to be locked in end positions defined by stop means (40, 41).

3. Vehicle according to claim 2, characterized in that each of the counterweights (31) is movably supported adjacent its ends by means of rollers (37) on said guideways.

4. Vehicle according to claim 2, characterized in that each of the guideways (30) comprises two laterally spaced angle bars (32, 33) having horizontal portions to form racks for the respective counterweight (31), while their vertical portions form lateral limitations of the guideway.

5. Vehicle according to claim 2, characterized in that each guideway (30) comprises channel members closed on the sides and the bottom thereof, while their undersides are arranged as portions of fenders.

6. Vehicle according to claim 2, characterized in that the outer sides of said guideways (30) are interrupted over a longitudinal portion corresponding to the width of a boarding step (17) to said operator cab (18), and are bridged each by a removably supported guideway (34).

7. Vehicle according to one of the preceding claims, which is steerable by an articulation between front and rear articulated vehicle portions, characterized in that longitudinal guideways on both sides adjacent the operator cab are interrupted by a small slot between the front and rear portion of the vehicle.

8. Vehicle according to one of the preceding claims, characterized in that the guideways (30) are provided with covers (39) at least adjacent both end positions of their counterweights.

9. Vehicle according to one of the preceding claims, characterized in that the guideways are closed endwise by end stops (40, 41), while the counterweights (31) may be locked by plug means and/or bolt means (42).

10. Vehicle according to claim 1, characterized in that the ballast means comprise a liquid contained within a closed system, which includes receptacles (44, 45) adjacent the forward and rearward ends of the vehicle, further at least one connecting line (46) therebetween, and at least one lock valve (47) in said connecting line.

11. Vehicle according to claim 10, characterized in that the receptacles (44, 45) include vent openings or venting valves, respectively.

12. Vehicle according to claim 1, characterized in that the ballast means comprise a pourable powder or granular material or balls, which is accommodated in a closed system consisting of receptacles (44, 45) disposed adjacent the front and rear ends of the vehicle with connecting lines (46) extending between said receptacles and including at least one lock valve (47).

## Revendications

1. Véhicule comportant un chassis équipé de roues motrices (11, 12) ou de chenilles avec un ou plusieurs essieux moteurs ainsi que d'un lest mobile dans le sens longitudinal du véhicule avec des moyens pour guider les mouvements de ce lest, ce véhicule (10) étant plus particulièrement du type porteur pourvu à ses deux extrémités de supports pour des outils fixes ou amovibles (14, 20), caractérisé en ce qu'il comporte des moyens de verrouillage pour immobiliser le lest en chacune de ses deux positions de fin de course et en ce que ce lest est déplaçable d'une extrémité du véhicule à l'autre sans intervention de moyens mécaniques ou hydrauliques, mais par simple gravité, une fois qu'il est déverrouillé, lorsqu'une des extrémités du véhicule est relevée par rapport à l'autre.

2. Véhicule selon la revendication 1, caractérisé en ce que le lest est constitué par des contrepoids (31) mobiles sur des voies de guidage (30) s'étendant sur la longueur du véhicule de part et d'autre de la cabine de conduite (18) au dessus des essieux (11, 12), ces contrepoids pouvant être immobilisés en des positions de fin de course bien définies au moyen de butées (40, 41).

3. Véhicule selon la revendication 2, caractérisé en ce que les contrepoids (31) sont munis, au voisinage de leurs extrémités, de galets (37) par lesquels ils prennent appui sur les voies de guidage (30).

4. Véhicule selon la revendication 2, caractérisé en ce que les voies de guidage (30) sont constituées chacune d'une paire de cornières (32, 33) se faisant face, les ailes horizontales de ces cornières formant un chemin de roulement pour le contrepoids (31) et leurs ailes verticales formant un moyen de guidage latéral.

5. Véhicule selon la revendication 2, caractérisé en ce que les voies de guidage (30) ont une section en forme de gouttière fermée à sa partie inférieure et sur ses côtés, le fond (38) de cette gouttière constituant une partie d'un garde-boue.

6. Véhicule selon la revendication 2, caractérisé en ce que le côté extérieur des voies de guidage (30) est interrompu sur une longueur correspondant à la largeur d'un escalier (17) d'accès à la cabine (18) et est susceptible d'être complété, chaque fois que c'est nécessaire, par un tronçon de voie (34) amovible.

7. Véhicule articulé selon une des revendications précédentes, caractérisé en ce que les côtés intérieurs des voies de guidage, proches de la cabine (18), sont interrompus, entre la partie antérieure et la partie postérieure du véhicule, par une coupure de faible longueur.

8. Véhicule selon une des revendications précédentes, caractérisé en ce que les voies de guidage (30) sont recouvertes d'un couvercle (39), tout au moins dans la zone de fin de course des contrepoids, à l'avant et à l'arrière.

9. Véhicule selon une des revendications précédentes, caractérisé en ce que les voies de guidage sont obturées, à leurs extrémités, par des butées (40, 41) sur lesquelles les contrepoids (31) peuvent être fixés par des moyens de fixation (42) tels que des boulons ou des tenons.

10. Véhicule selon la revendication 1, caractérisé en ce que le lest est constitué d'une matière fluide contenue dans un système clos comprenant des réservoirs (44, 45) aménagés au voisinage des extrémités avant et arrière du véhicule, avec au moins une conduite (46) de liaison entre ces réservoirs et au moins une vanne d'arrêt (47) sur cette conduite.

11. Véhicule selon la revendication 10, caractérisé en ce que les réservoirs (44, 45) sont pourvus d'évents ou de soupapes d'aération.

12. Véhicule selon la revendication 1, caractérisé en ce que le lest est constitué d'une matière pulvérulente ou granulaire, ou encore de billes, ce lest étant contenu dans un système clos comprenant des réservoirs (44, 45) aménagés au voisinage des extrémités avant et arrière du véhicule et des conduites (46) de liaison entre ces réservoirs avec au moins une vanne d'arrêt (47) sur ces conduites.

0 012 236

Fig.1

Fig.2

**Fig.3**

31

37

42

41

31

33

32

A

B

34

35

40

31

39

33

32

38

**Fig.4**

Fig. 5

Fig.6